(19) Europäisches Patentamt
European Patent Office
Office européen des brevets

(11) EP 1 114 007 B1

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(21) Anmeldenummer: **99953693.1**

(22) Anmeldetag: **02.09.1999**

(51) Int Cl.[7]: **C04B 35/468**, H01B 3/12, H01P 7/10, H01G 4/12

(86) Internationale Anmeldenummer:
**PCT/DE99/02780**

(87) Internationale Veröffentlichungsnummer:
**WO 00/015575 (23.03.2000 Gazette 2000/12)**

(54) **REDUKTIONSSTABILE KERAMIKMASSEN**
REDUCTION-STABLE CERAMIC SUBSTANCES
MATIERES CERAMIQUES STABLES A LA REDUCTION

(84) Benannte Vertragsstaaten:
**AT BE CH CY DE DK ES FI FR GB GR IE IT LI LU MC NL PT SE**

(30) Priorität: **10.09.1998 DE 19841487**

(43) Veröffentlichungstag der Anmeldung:
**11.07.2001 Patentblatt 2001/28**

(73) Patentinhaber: **EPCOS AG**
**81541 München (DE)**

(72) Erfinder:
- **FELTZ, Adalbert**
  **A-8530 Deutschlandsberg (AT)**
- **WEBHOFER, Andreas**
  **A-9635 Dellach (AT)**
- **AICHHOLZER, Klaus-Dieter**
  **A-8530 Deutschlandsberg (AT)**

(74) Vertreter: **Epping, Wilhelm, Dipl.-Ing. et al**
**Epping Hermann & Fischer**
**Ridlerstrasse 55**
**80339 München (DE)**

(56) Entgegenhaltungen:
**EP-A- 0 534 802** **EP-A- 0 701 981**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft reduktionsstabile COG-Keramikmassen hoher Dielektrizitäts-konstante nach dem Oberbegriff des Patentanspruchs 1.

Derartige COG-Keramikmassen werden z. B. bei Vielschichtkondensatoren und LC-Filtern mit Kupfer-Elektroden eingesetzt und sind für Anwendungen im Hoch-frequenzbereich geeignet. Als COG-Keramik werden solche Massen bezeichnet, die einen geringen (< 30 ppm/K) Temperaturkoeffizienten der Kapazität besitzen.

Im Fall von Materialien mit niedrigen Dielektrizitätskonstanten DK sind bereits technische Lösungen bekannt geworden, die die Gemeinsamsinterung einer Keramikmasse mit Cu-Elektroden unter reduzierenden Bedingungen gestatten, indem die Sintertemperatur unter die Schmelztemperatur des Kupfers (1083 °C) abgesenkt ist. Es werden dazu bestimmte Sinterhilfsmittel, vorzugsweise Zusätze von Glasfritten angewendet, deren stoffliche Basis Bleioxid und/oder Wismutoxid enthaltende Systeme sind. Um die Oxidation des Kupfers während der Sinterung im Bereich von 1000 °C zu unterbinden, muß ein Sauerstoffpartialdruck < $10^{-2}$ Pa angewendet werden. Zugleich darf ein unterer kritischer Grenzwert des Sauerstoffpartialdrucks nicht unterschritten werden, da andernfalls die Keramik oder ein Bestandteil der zugesetzten Glasfritte der Reduktion unterliegt, was zwangsläufig zur Herabsetzung des Isolationswiderstandes und einer unzulässigen Erhöhung der dielektrischen Verluste führt. Zwecks Vermeidung einer lokalen Unterschreitung dieses unteren kritischen Grenzwertes muß die Entbinderung der Grünkörper vor dem Einsetzen der Sinterung vollständig realisiert sein.

In den Druckschriften EP 0 534 802 A1, US 5,264,403, US 5,304,521, US 5,350,721, US 5,479,140, US 5,493,262, US 5,488,019 und US 5,485,132 werden Keramikmassen der Stoffsysteme BaO - $TiO_2$ - $SE_2O_3$ beschrieben, in denen das Oxid der Seltenen Erdmetalle $SE_2O_3$ partiell durch $Bi_2O_3$ ersetzt sein kann, deren Sinterverdichtung teilweise bereits bei 900°C gelingt, indem Glasfrittenanteile, die CdO, PbO oder $Bi_2O_3$ enthalten, oder auch Gläser des Systems ZnO - $B_2O_3$ - $SiO_2$ zugesetzt sind. Dadurch wird eine Gemeinsamsinterung mit Silber-Elektroden an der Luft ermöglicht. Für eine Gemeinsamsinterung mit Kupfer-Elektroden unter Inertbedingungen, z. B. unter Stickstoff, erweisen sich die Systeme gegenüber einer partiellen Reduktion, die eine Herabsetzung des Isolationswiderstandes und Erhöhung der Verluste zur Folge hat, nicht als hinreichend stabil.

In den Druckschriften EP 0 534 801 A1, US 5,458,981 und US 5,292,694 werden gleichfalls BaO - $TiO_2$ - $SE_2O_3$ - Keramikmassen in Verbindung mit $B_2O_3$ und ZnO enthaltenden Glaszusätzen zum Zweck der Gemeinsamsinterung mit Silberelektroden geschützt. Die Entbinderung unter Luftzutritt verhindert auch in diesen Fällen die Kombination mit Kupfer-Elektroden, sodaß auf Silber oder Silber/Palladium-Legierungen als Elektrodenmaterial zurückgegriffen werden muß. Dem Vorteil einer kostengünstigen Anwendung von Silber-Elektroden steht der Nachteil der hohen Beweglichkeit insbesondere bei hoher Temperatur gegenüber, der zu Migrations-effekten und einer daraus resultierenden Verschlechterung der dielektrischen Eigenschaften Anlaß gibt.

In der älteren DE-Patentanmeldung 19749858.2 wird das für die Herstellung von COG-Kondensatoren und Mikrowellenresonatoren hoher DK genutzte Stoffsystem BaO-PbO-$Nd_2O_3$-$TiO_2$ im Bereich der Phasenbildung rhombischer Bronzen $(Ba_{1-y}Pby)_{6-x}Nd_{8+2x/3}Ti_{18}O_{54}$ mit 0, 6 < x < 2, 1 und 0 < y < 0, 6 für eine Sinterung bei Temperaturen < 1030°C und damit für die Gemeinsamsinterung mit Cu-Elektroden dadurch erschlossen, daß Sinterhilfsmittel, vorzugsweise PbO-freie Glasfritten bestimmter Zusammensetzung, zugemischt werden und eine vollständige Entbinderung unter Stickstoff durch Einwirkung von Wasserdampf bei erhöhter Temperatur unter Ausnutzung des aus der Erdölverarbeitung bekannten Steam-Reforming-Prozesses erreicht wird. Die Anpassung des Temperaturkoeffizienten der Kapazität TKC bzw. des Temperaturkoeffizienten der Resonanzfrequenz TKν0 an die für COG-Kondensatoren TKC < 30 ppm/K bzw. LC-Filter mit TKν0 < 10 ppm/K gültigen Toleranzgrenzen gelingt, indem Abwandlungen der Zusammensetzung der Keramikmasse durch Zusätze von $Nd_2Ti_2O_7$ oder von $Ba_{4,5}Sm_9Ti_{18}O_{54}$ vorgenommen werden. Zu dieser technischen Lösung ist einschränkend anzumerken, daß die Stabilität der Keramik durch den PbO-Gehalt begrenzt ist, was eine besonders sorgfältige Entbinderung und die Vermeidung eines zu geringen Sauerstoffpartial-drukkes bei der Sinterung erfordert. Die beiden Forderungen sind miteinander verknüpft, da insbesondere auch lokal die unzulässige Unterschreitung der kritischen Sauerstoffpartialdruckgrenze, verursacht etwa durch geringfügige organische Restbestandteile, vermieden werden muß. Andernfalls bildet sich eine eutektische Pb/Cu-Legierung, die bei 924 °C schmilzt, das heißt die Elektroden laufen aus.

Um einen solchen Nachteil zu vermeiden, erweisen sich PbO- und $Bi_2O_3$-freie Systeme als geeignet. So ist zum Beispiel die durch Sinterung bei ca.1400°C darstellbare Keramik $Ba_4(Sm_{0,6}Nd_{0,4})_{9,233}Ti_{18}O_{54}$ durch einen TKν0 = Wert von + 9 ppm/K und ein Güte-Frequenzprodukt Qν0 = 9000 (3 GHz) gekennzeichnet [P. Lafez, G. Desgardin, B. Raveau, J. Mater. Sc. 30 (1995) 267]. Vergleichbare Werte werden in der Literatur für die Zusammensetzung $Ba_{4,2}(Sm_{0,3}Nd_{0,7})_{9,2}Ti_{18}O_{54}$ angegeben [H. Ohsato, H. Kato, M. Mizuta, S. Nishigaki, T. Okuda, Jpn. J. Appl. Phys. 34 (1995) 5413] . Zur Erniedrigung der für Keramikmassen des Systems BaO - $TiO_2$ - $Nd_2O_3$ - $Sm_2O_3$ benötigten hohen Sintertemperatur werden in der EP 0 701 081 A1 Glasfrittenzusätze vorgeschlagen, die PbO und sogar $GeO_2$ enthalten, was aus den dargelegten Gründen für die Stabilität gegenüber Reduktion von Nachteil ist.

Der Erfindung liegt die Aufgabe zugrunde, COG-Keramikmassen mit möglichst hoher Dielektrizitätskonstante

auf der Basis eines gegenüber Reduktion hochstabilen Stoffsystems herzustellen, das je nach gewählter Zusammensetzung einen TKC-Wert < 30 ppm/K oder einen TKν0-Wert < 10 ppm/K einzustellen gestattet und weiterhin eine Sintertemperatur anzugeben, die unter der Schmelztemperatur des Kupfers liegt und die Sinterverdichtung in Gegenwart von Kupfer-Innenelektroden bei Erhaltung der für COG-Vielschichtkondensatoren und LC-Filter benötigten dielektrischen Eigenschaften ermöglicht.

Diese Aufgabe wird erfindungsgemäß mit einer reduktionsstabilen COG-Keramikmasse gelöst, die die Merkmale des Patentanspruchs 1 besitzt.

Vorteilhafte Weiterbildungen sind in den Unteransprüchen angeführt.

Der Vorteil der Erfindung besteht darin, das für die Herstellung von COG-Kondensatoren und Mikrowellenresonatoren hoher DK genutzte Stoffsystem BaO - $Nd_2O_3$ - $Sm_2O_3$ - $TiO_2$ im Bereich der Phasenbildung rhombischer Bronzen $Ba_{6-x}(Sm_yNd_{1-y})_{8+2x/3}Ti_{18}O_{54}$ dadurch zu nutzen, daß ein TKC-Wert < 30 ppm/K in der Reihe $Ba_{4,5}(Sm_yNd_{1-y})_9Ti_{18}O_{54}$ (x = 1.5) für y = 0.9 bzw. in der Reihe $Ba_4(Sm_{0.7}Nd_{0.3})_{9.33}Ti_{18}O_{54}$ (x = 2) für y = 0.7 erreicht und ein TKν0-Wert < 10 ppm/K in der Reihe $Ba_{4,5}(SmyNd_{1-y})_9Ti_{18}O_{54}$ (x = 1.5) für y = 1 bzw. in der Reihe $Ba_4(Sm_{0.7}Nd_{0.3})_{9.33}Ti_{18}O_{54}$ (x = 2) für y = 0.8 gezielt eingestellt werden kann und dabei zugleich eine Sinterung bei Temperaturen < 1030°C und damit für die Gemeinsamsinterung mit Cu-Elektroden dadurch zu ermöglichen, daß einem solchen Keramikpulver ein Sinterhilfsmittel, vorzugsweise eine Glasfritte bestimmter Zusammensetzung, zugemischt wird.

Es ist weiterhin von Vorteil, daß auf Grund der Kenntnis der Zusammensetzungs-abhängigkeit der TKC- bzw. TKν0-Werte in den genannten Reihen eine durch den Zusatz von Glasfritte bedingte Verschiebung der Temperaturkoeffizienten nach positiven oder negativen Werten durch eine gezielte Änderung der Zusammensetzung kompensiert werden kann.

Der Vorteil des Herstellungsverfahrens besteht darin, daß die Sinterverdichtung unter Stickstoff bei einem Sauerstoffpartialdruck < $10^{-2}$ Pa durchgeführt wird, ohne daß die für COG-Kondensatoren und Mikrowellenkeramiken und damit für LC-Filter typischen Eigenschaften etwa infolge einer partiellen Reduktion verloren gehen.

Die vollständige Entbinderung der Grünkörper gelingt in einem Temperaturbereich unterhalb des Einsetzens der Sinterverdichtung, indem der aus der Petrochemie bekannte Prozeß des Abbaus von Kohlenwasserstoffen oder auch von höher kondensiertern organischen Verbindungen zu Kohlendioxid und Wasserstoff durch Einwirkung von Wasserdampf bei erhöhter Temperatur ("Steamcracking") auf den Keramikprozeß übertragen wird. Zum Beispiel läßt sich aus thermodynamischen Daten für den Abbau von Polyethylenglycol oder Polyacrylsäure als Binder gemäß der Reaktion:

$$(-[CH_2-CH_2-O]-)_n + 3n\ H_2O \text{ ---> } 2n\ CO_2 + 5n\ H_2$$

$$(-[\underset{\substack{|\\ COOH}}{CH_2}-CH_2]-)_n \quad + \quad 4n\ H_2O \text{ ---> } 3n\ CO_2 \quad + \quad 13n/2\ \ H_2$$

eine geringfügige negative freie Enthalpie abschätzen, so daß der Vorgang der Entbinderung der Grünkörper, der zwecks Vermeidung einer Oxidation des Kupfers unter Stickstoff (Sauerstoffpartialdruck < $10^{-2}$ Pa) vorgenommen werden muß, vollständig ablaufen kann.

Die Erfindung wird an folgenden Ausführungsbeispielen näher erläutert.

Ausführungsbeispiele

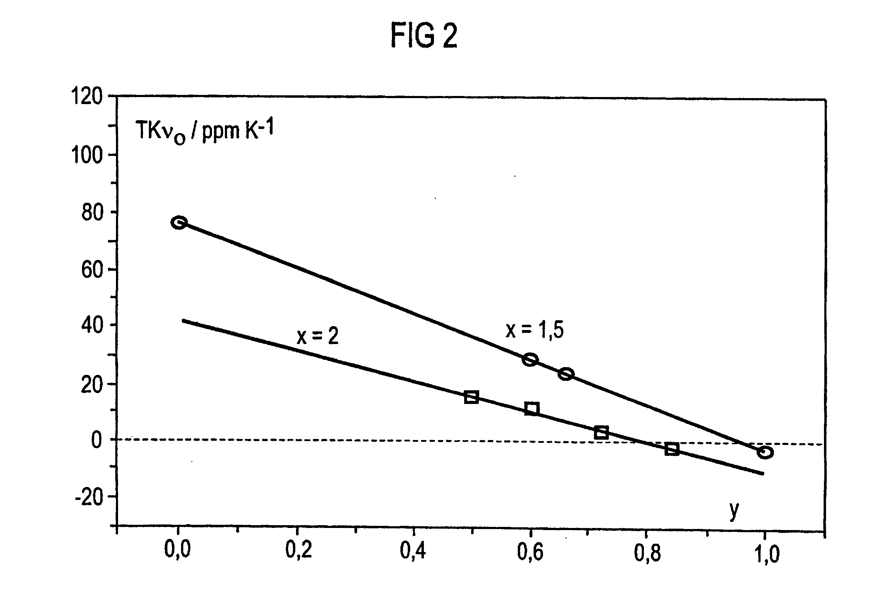

Entsprechend der allgemeinen Formel $Ba_{6-x}(Sm_yNd_{1-y})_{8+2x/3}Ti_{18}O_{54}$ werden die Zusammensetzungen der Keramikmassen in den Reihen x = 1.5 und x = 2 als homogene Mischphasen durch Variation des y - Wertes entsprechend der in Figur 1 und Figur 2 dargestellten Abhängigkeit des TKC- und TKν0-Wertes in den Grenzen 0 < y < 1 variiert und der Zusammensetzungsparameter y bei gegebenem Wert x = 1,5 oder x = 2 mit der Zielsetzung festgelegt, daß die Kriterien TKC < ± 30 ppm/K für COG-Kondensatoren und TKν0 < 10 ppm/K für LC-Filter erfüllt werden.

In bekannter Weise wird die Keramikmasse nach dem Mischen der Rohstoffe $BaCO_3$, $Nd_2O_3$, $Sm_2O_3$ und $TiO_2$ durch Kalzinieren bei 1250 °C mit einer Haltezeit von mindestens 6 Stunden hergestellt. Zwecks Gewinnung von Vergleichswerten wird das Umsetzungsprodukt ohne Zusatz von Glasfritte einem Mahlprozeß unterworfen (mittlere Korngröße ca. 0,6 μm), das erhaltene Pulver anschließend in ein Granulat überführt und letzteres durch Pressen zu scheibenförmigen Proben S oder zu für Resonanzmessungen geeigneten zylinderförmigen Körpern Z verdichtet und diese bei 1400°C 6-10 h gesintert.

In Tabelle 1 sind die durch Sintern bei hoher Temperatur erhaltenen Eigenschaften von COG-Keramikproben $Ba_{6-x}(Sm_yNd_{1-y})_{8+2x/3}Ti_{18}O_{54}$ angegeben und zwar für scheibenförmige Proben S in den Abmessungen Ø 12-13 mm, Dicke 0,6-0,7 mm, die nach dem Aufbringen von Ag-Elektroden mittels Ag-Paste und Einbrennen im Bereich von 1

MHz elektrisch vermessen wurden und zylinderförmige Proben Z, deren dielektrische Eigenschaften nach einer Resonanzmethode im GHz-Bereich elektrodenlos ermittelt wurden. TKC-Wert und TKν0-Wert sind über den Temperaturkoeffizienten der Dielektrizitätskonstante TKε und den thermischen Ausdehnungskoeffizienten α entsprechend den Gleichungen

$TKC = TK\varepsilon + \alpha$ und $TK\nu0 = - TK\varepsilon/2 - \alpha$

miteinander verknüpft, so daß eine Umrechnung der beiden Größen ineinander möglich ist. Für den Ausdehnungskoeffizienten $\alpha_{25\text{-}100°C}$ sind an den Proben Werte zwischen 6,6 und 8,1 ppm/K ermittelt worden.

Die Eigenschaftswerte lassen erkennen, daß die Proben 1 und 5 bis 9 die Kriterien für COG-Kondensatoren und die Proben 5, 8 und 9 die für LC-Filter gesetzten Kriterien erfüllen. Die am Qν0-Wert erkennbare dielektrische Güte der Keramik fällt bei ansteigendem x-Wert umso höher aus je größer das Verhältnis von $S_E2O_3$/BaO in der Phasenzusammensetzung ist.

Derartige Keramiken gewährleisten auf Grund der Abwesenheit von PbO eine erhöhte Stabilität gegenüber Reduktion bei der Sinterung unter Inertbedingungen, z. B. unter Stickstoff.

Bei den scheibenförmigen Proben S wurden tanδ und $TKC_{+25\text{-}+85°C}$ (ppm/K) (TKC) jeweils bei 1 MHz gemessen. Qν0 ist in THz bzw. (GHz) angegeben, während TKν0.+25-+85°C einerseits aus TKC berechnet (TKν0(b)) und andererseits an den Proben gemessen (TKν0(g)) wurde und zwar in ppm/K. Die mit * bezeichneten Werte wurden im Bereich +25-125 °C bestimmt.

Tabelle 1:

| Probe | x | y | ρrel. /% | ε | tanδ (S) | TKC (S) | Qν0 (Z) | TKν0(b ) | TKν0(g) (Z) |
|---|---|---|---|---|---|---|---|---|---|
| 1 | 1 | 0,6 | 96,1 | 88 | $< 1\cdot10^{-3}$ | +7 | 4,90 (4,61) | +9 | ? |
| 2 | 1,5 | 0 | - | 85,5 | $< 1\cdot10^{-3}$ | -100 -111* | 7.68 (4.80) | +47 | +76 |
| 3 | 1,5 | 0,6 | 97,2 | 86,5 | $< 1\cdot10^{-3}$ | -48 -50* | 8.95 (4,70) | +21 | +28.2 |
| 4 | 1,5 | 2/3 | 97,3 | 86,0 | $< 1\cdot10^{-3}$ | -43 -47* | 7,85 (4,71) | +18 | +23.5 |
| 5 | 1,5 | 1 | 98,0 | 83,8 | $< 1\cdot10^{-3}$ | +20 +22* | 8,19 (4,78) | -14 | -2.7 |
| 6 | 2 | 0,5 | 98,1 | 83,7 | $< 1\cdot10^{-3}$ | -20* -24 | 10,77 (4,77) | +6 | +15,7 |
| 7 | 2 | 0,6 | 98,2 | 83,4 | $< 1\cdot10^{-3}$ | -13* -13 | 10,70 (4,77) | +3 | +11,0 |
| 8 | 2 | 0,72 | 97,4 | 82,7 | $< 1\cdot10^{-3}$ | +10* +13 | 10,56 (4,79) | -8 | +3,8 |
| 9 | 2 | 0,84 | 97,7 | 81,7 | $< 1\cdot10^{-3}$ | +10* +15 | 10,50 (4,83) | -9 | +2,1 |

Zur Gemeinsamsinterung mit Kupferelektroden wird dem durch Kalzination bei 1250°C erhaltenen Keramikpulver im Bereich $3 \leq p < 10$ m-% eine Glasfritte des Systems

(A) $ZnO - B_2O_3 - SiO_2$,

vorzugsweise der bestimmten Zusammensetzung $(ZnO)_{58,5}(B_2O_3)_{31,45}(SiO_2)_{10,05}$ oder des Systems

(B) $K_2O\text{-}Na_2O\text{-}BaO\text{-}Al_2O_3 - ZrO_2\text{-}ZnO\text{-}SiO_2\text{-}B_2O_3$

vorzugsweise der bestimmten Zusammensetzung $(K_2O)_{4,5}(Na_2O)_{3,5}(BaO)_{2,3}(Al_2O_3)_{2,1}(ZrO_2)_{2,9}(ZnO)_{4,4}(SiO_2)_{53,5}(B_2O_3)_{26,7}$ oder des Systems

(C) $Li_2O$ - BaO - $B_2O$ - $SiO_2$,

vorzugsweise der bestimmten Zusammensetzung $(Li_2O)_{7,0}(BaO)_{42,0}(B_2O_3)_{22,0}(SiO_2)_{29,0}$ zugesetzt und die Mischung in wäßriger Suspension einem Mahlprozeß unterzogen, bis eine mittlere Korngröße von 0,6 µm bei annähernd monomodaler Verteilung erreicht ist. Der Schlicker wird nach Filtration und Trocknen unter Zugabe eines Preßhilfsmittels zu einem Granulat weiterverarbeitet, aus dem scheiben- oder zylinderförmige Grünkörper gepreßt werden oder aber unmittelbar nach der Zugabe eines geeigneten organischen Bindersystems zu Folien verarbeitet bzw. durch Sprühen in ein preßfähiges Granulat überführt.

Durch Aufbringen von Cu-Paste mittels Siebdruck wird die Folie mit einer für LC-Filter bestimmter Auslegung bzw. einer für COG-Kondensatoren bestimmter Kapazität und Bauform geeigneten Elekrodenstruktur versehen, so daß nach dem Stapeln, Laminieren und Cutten Grünteile erhalten werden, die der Entkohlung und Sinterung zugeführt werden können.

Zur Feststellung der dielektrischen Keramikeigenschaften erweisen sich mit Cu-Elektroden versehene scheibenförmige Proben S (Ø 12-13 mm, Dicke 0,6-0,7 mm) bzw. zylinderförmige Preßkörper Z (Ø 10,0 mm, Höhe 4,6 mm) als geeignet. Letztere werden zur Vermessung im GHz-Bereich ohne Elektroden gesintert.

Kondensatoren mit Cu-Innenelektroden gelangen in der Ausführungsform 1206 (100 pF) und 0603 (20 pF) zur Vermessung. Bei LC-Filtern wird bei den an Zylinderproben ermittelten Keramikeigenschaften die Güte im GHz-Bereich durch den Aufbau und die Eigenschaften der Cu-Elektrodenstruktur bestimmt, sodaß Ausführungsbeispiele zur Charakterisierung der Keramik an dieser Stelle entfallen.

Zur Entbinderung sind die Grünkörper in einem Ofen mit kontrollierter Atmosphäre einem Gasstrom von Reinststickstoff (2 bis 5 l/min., Rest-Sauerstoffpartialdruck < $10^{-2}$ Pa) ausgesetzt, dem zwischen 2 und 23 g Wasserdampf pro Stunde zudosiert werden. Zunächst wird auf 400 °C aufgeheizt, 2 h gehalten, anschließend auf 680 bis 750 °C gebracht, wobei die vollständige Entbinderung eine Reaktionszeit bis zu 6 h beansprucht. Anschließend wird die Wasserdampfzufuhr bis auf etwa 1 g/h zurückgenommen und bei 900 bis 1000 °C die Sinterverdichtung durchgeführt.

Die Cu-Außenmetallisierung der COG-Kondensatoren findet, der vorgeschriebenen Einbrennkurve der betreffenden Kupferpaste folgend, in einem gesonderten Prozeßschritt gleichfalls unter Reinststickstoff in Gegenwart von Wasserdampf statt, um eine reduzierende Veränderung der Keramik durch in der Paste enthaltene Binderbestandteile zu vermeiden.

In den folgenden Tabellen 2, 3 und 4 sind Beispiele von reduktionsstabilen COG-Keramikproben S (scheibenförmig) und Z (zylinderförmig) aufgeführt, die auf der Basis von Keramikmassen der in Tabelle 1 angegebenen Zusammensetzungen 7 (Tabelle 2), 9 (Tabelle 3) und 5 (Tabelle 4) unter Zusatz der Glasfritte (A), (B) oder (C) erhalten wurden, wobei der Gehalt an Glasfritte jeweils in m-% angegeben ist. tanδ wurde bei 1 MHz bestimmt und Qν0 ist in THz bzw. (GHz) angegeben. TKC im Bereich +25/125°C und TKν0 im Bereich +25/55°C (Tabelle 3) bzw. +25/85°C (Tabelle 4)sind in ppm/K angegeben. Weiterhin sind Sintertemperatur T in °Cund -zeit t in h angeführt.

Tabelle 2

| Probe | T / t | ρrel/% | ε | tanδ | TKC | Qν0 | TKν0 |
|---|---|---|---|---|---|---|---|
| S1/8%(A) | 975 /6 | 97 | 58 | $<1\cdot10^{-3}$ | -30 | | |
| S2/8%(A) | 1000/6 | 99 | 61 | $<1\cdot10^{-3}$ | -29 | | |

Tabelle 3

| Probe | T / t | ρrel/% | ε | tanδ | TKC | Qν0 | TKν0 |
|---|---|---|---|---|---|---|---|
| S3/8%(A) | 975 C/6 | 98 | 57 | $<1\cdot10^{-3}$ | -51 | | |
| S4/8%(A) | 1000 /6 | 98 | 57 | $<1\cdot10^{-3}$ | -25 | | |
| S5/6%(B) | 1030 /6 | 96 | 55 | $<1\cdot10^{-3}$ | -38 | | |
| Z1/6%(A) | 1000 /6 | 99 | 58 | | | 1,0 (5,54GHz) | -3,1 |
| Z2/6%(A) | 975 /6 | 96 | 55 | | | 0,83 (5,65GHz) | +4,8 |
| Z3/6%(A) | 975 /6 | 98 | 54 | | | 0,88 (5,94GHz) | -7,1 |

Tabelle 4

| Probe | T / t | ρrel/ % | ε | tanδ | TKC | Qν0 | TKν0 |
|---|---|---|---|---|---|---|---|
| S6/6%(A) | 1000 /6 | 99 | 63 | $<1\cdot10^{-3}$ | +14 | | |
| S7/8%(B) | 1030 /6 | 98 | 52 | $<1\cdot10^{-3}$ | -20 | | |
| S8*/6%(C) | 1030 /6 | 98 | 72 | $<1\cdot10^{-3}$ | -46 | | |
| Z4/6%(A) | 1000 /6 | 99 | 63 | | | 1,5(5,7GHz) | -8,9 |
| Z5/6%(A) | 980 /1 | 98 | 61 | | | 2,2(5,8GHz) | -9,2 |
| Z6/8%(B) | 1030 /6 | 98 | 52 | | | 1,4(5,8GHz) | -7,3 |
| Z7+/6%(C) | 1030 /6 | 98 | 71 | | | 2,4(5,2GHz) | +5,9 |
| Z7*/6%(C) | 1030 /6 | 98 | 72 | | | 1,5(5,1GHz) | -12,3 |
| Z7°/6%(C) | 1030 /6 | 98 | 72 | | | 0,6(5,1GHz) | |

Die Proben S1(A) und S2(A) verdeutlichen, daß die Zumischung von 8% der Glasfritte (A) zur Keramikmasse 7 der Tabelle 1 eine Sinterverdichtung in Gegenwart von Cu-Elektroden bereits bei 975°C ermöglicht, dabei aber zugleich eine Absenkung des TKC-Wertes von -13 ppm/K auf -29 ppm/K auftritt, so daß die an eine COG-Kondensatorkeramik gestellten Materialeigenschaften in Verbindung mit der erreichten niedrigen Sintertemperatur und Cu-Elektroden im Grenzbereich noch erfüllt werden. Der DK-Wert erfährt gegenüber der glasfreien Keramik erwartungsgemäß eine Erniedrigung und zwar von 82 auf ca. 60.

Der gleiche Effekt wird bei den Proben S3(A), S4(A) und S5(B) beobachtet, denen die Keramikmasse 9 der Tabelle 1 zugrundeliegt. Ausgehend von + 15 ppm/K fällt die durch die Wechselwirkung mit der Glasfritte (A) bzw. (B) bedingte Verschiebung des TKC-Wertes nach negativen Werten hier größer aus, sodaß die für COG-Kondensatoren zutreffende Toleranzgrenze bereits überschritten ist. Der Verschiebungseffekt ist von der Zusammensetzung des Glases und von der Sintertemperatur abhängig.

Für die Zylinderproben Z1(A) bis Z3(A), die gleichfalls auf der Keramikmasse 9 der Tabelle 1 basieren, ergeben sich in der Kombination mit Glas (A) dagegen TKν0-Werte, die innerhalb der für Hochfrequenzanwendungen, z. B. für LC-Filter, gültigen Toleranzgrenze liegen. Als unzureichend erweist sich bei diesen Proben das Güte-Frequenzprodukt. Ausgehend von Qν0 = 10,5 THz bei 4,83 GHz Meßfrequenz für die glasfreie Keramikmasse 9 wird die Güte durch die Wechselwirkung mit Glas (A) bei der angewandten Sintertemperatur und -zeit auf Werte < 1THz herabgesetzt. Diese Werte liegen unter der für LC-Filter geforderten Toleranzgrenze von ca. 2 THz bei 5 GHz Meßfrequenz.

Den Proben S6(A), S7(B) und S8*(C) sowie Z4(A), Z5(A), Z6(B) Z+7(C), Z7*(C) und Z7°(C) liegt jeweils die Keramikmasse 5 der Tabelle 1 in der Kombination mit Glas (A), (B) und (C) zugrunde. Die Nd-freie, d.h. als Seltene Erdkomponente nur noch Sm2O3 enthaltende Verbindung, erweist sich gegenüber der Wechselwirkung mit den Glasfritten als Sinterhilfsmittel kinetisch generell als stabiler.

Ausgehend von einem TKC-Wert von + 20 ppm/K für die Keramikmasse 5 verursacht die Zumischung von 6% Glas (A) bei Sinterung der Probe S6(A) bei 1000°C lediglich eine Abnahme auf +14 ppm/K. Für das Güte-Frequenzprodukt wird bei der entsprechenden Probe Z4(A) gegenüber Z1(A) bis Z3(A) (Keramikmasse 9) ein erhöhter Qν0-Wert von 1,5 THz gefunden, der für LC-Filteranwendungen allerdings immer noch zu niedrig ist.

Die niedrige Sintertemperatur von 1000°C, der relativ hohe DK-Wert und die vergleichsweise geringe Modifizierung des TKC-Wertes lassen die Materialkombination Keramik 5 nach Tabelle 1 mit Glas (A) als vorteilhaft für Kondensatoren erscheinen.

Daß die Abnahme des Güte-Frequenzprodukts auf einer partiellen strukturellen Veränderung der Keramikverbindung infolge Wechselwirkung mit der Glasfriite beruht, zeigt der Vergleich von Probe Z4(A) mit Probe Z5(A). Verminderung von Sintertemperatur und -zeit auf 980 °C bzw. 1h ergeben Qν0 = 2,2 THz, wobei ein noch günstigerer Wert für den Temperaturkoeffizienten der Resonanzfrequenz TKν0 = - 9,2 ppm/K erhalten wird.

Die Kombination der Keramikmasse 5 mit Glas (B) in den Proben S7(B) und Z6(B) stellt sich als weniger günstig heraus. Die Sintertemperatur muß auf 1030°C erhöht werden, der TKC-Wert wird von + 20 ppm/K auf - 20 ppm/K abgesenkt und das Güte-Frequenzprodukt Qν0 fällt nicht höher aus als bei der Materialkombination Keramikmasse 5 mit Glas (A) bei gleicher Sinterzeit.

Am vorteilhaftesten für LC-Filteranwendungen ist die Kombination der Keramikmasse 5 mit Glas (C) . Dieser Vorteil kommt jedoch nur dann voll zur Geltung, wenn das Glas entsprechend der Bezeichnung (C1000) lediglich bei 1000°C geschmolzen und durch Abschrecken in Wasser frittiert wurde. Nur dann wird, wie die Probe Z7(C1000) zeigt, selbst bei 1030°C Sintertemperatur und 6 h Sinterzeit ein vergleichsweise hoher TKν0-Wert von 2,4 THz bei 5,2 GHz

Meßfrequenz erhalten, der den für LC-Filter geltenden Anforderungen entspricht.

Schmelzen von Glas (C) bei 1100 (Proben S8*, Z7*) bzw. noch ungünstiger bei 1200°C (Probe Z7°) führt zu einer Glasstruktur, die eine wesentlich stärkere degradierende Wirkung auf die Keramikverbindung 5 $Ba_{4,5}Sm_9Ti_{18}O_{54}$ auslöst. Probe Z7+ wurde dagegen durch Schmelzen von Glas bei 1000 °C erhalten.

In Tabelle 5 sind Meßergebnisse aufgeführt, die an Kondensatoren K mit Cu - Innenelektroden der Kapazität von ca. 100 pF (1206) mit 4 Cu-Innenelektroden) und ca. 20 pF (0603) mit 7 Cu-Innenelektroden erhalten wurden. Ihnen liegt die Keramikmasse 5 der Tabelle 1 in der Kombination mit 6 % Glas (A) zugrunde. Die für COG-Kondensatoren geltenden Kriterien werden hinsichtlich des TKC-Wertes erfüllt. Hervorzuheben sind der hohe Isolations-widerstand RIs und der niedrige tanδ - Wert. Letzterer wurde bei 1 MHz und 100 bzw. 200 MHz ermittelt. Weiterhin zeichnen sich die Kondensatoren mit Cu - Innenelektroden durch einen vergleichsweise niedrigen Ersatzserienwiderstand ESR aus. Dieser wurde mittels einer Meßbrücke (MB) bei 500 MHz sowie durch S-Parameter-Messung (S) bei 1,1 GHz erfaßt.

Der HALT - Test (200°C/200 V) belegt die Betriebssicherheit der Kondensatoren. Ein Ausfall durch Abfall des Isolationswiderstandes unter 70 % des Ausgangswertes wurde unter den angegebenen Bedingungen nicht festgestellt. Es ergaben sich für die Bauform 1206 folgende Werte: $R_{Is,50\%}$>0,7$_{RIs,Anfang}$ nach 2550 min und $R_{Is,50\%}$>0,5$R_{Is,Anfang}$ nach 5300 min.

Die Kapazität C ist in pF, der TKC in ppm/K und der Isolationswiderstand Ris in MΩ angegeben. tanδ ist für zwei verschiedene Frequenzen angeführt während der ESR-Wert in mΩ angegeben ist.

Tabelle 5

| Bauform | C | TKC | RIs | tanδ | tanδ | ESR (MB) | ESR (S) |
|---|---|---|---|---|---|---|---|
| 1206 | 106±1 | +17 | 9·106 | $0{,}5\cdot 10^{-3}$ (1MHz) | $(4{,}2\pm 0{,}3)\cdot 10^{-3}$ (100 MHz) | 163 ± 18 (500 MHz) | |
| 0603 | 26 ± 1 | + 10 | 4 106 | $0{,}5\ 10^{-3}$ (1MHz) | $(2{,}3\pm 0{,}2)\cdot 10^{-3}$ (200 MHz) | 123±13 (500 MHz) | 80 (1,1 GHz) |

**Patentansprüche**

1. Reduktionsstabile COG Keramikmassen hoher Dielelektrizitätskonstante, insbesondere für Vielschichtkondensatoren oder LC-Filter mit Cu-Elektroden, auf der Basis des Stoffsystems $BaO\text{-}Nd_2O_3\text{-}Sm_2O_3\text{-}TiO_2$ mit einer Zusammensetzung im Bereich der Phasenbildung rhombischer Bronzen mit Zusätzen einer Glasfritte aus den Systemen

   (A) $ZnO - B_2O_3 - SiO_2$,

   oder

   (B) $K_2O - Na_2O - BaO - Al_2O_3 - ZrO_2 - ZnO - SiO_2 - B_2O_3$,

   oder

   (C) $Li_2O - BaO - B_2O_3 - SiO_2$

   **gekennzeichnet durch** die allgemeine Formel $Ba_{6-x}(Sm_yNd_{1-y})_{8+2x/3}Ti_{18}O_{54}$ + p Gew.-% Glasfritte mit $1 \le x \le 2$, $0{,}5 \le y \le 1{,}0$ und $3 \le p < 10$.

2. Reduktionsstabile Keramikmasse nach Anspruch 1,
   **dadurch gekennzeichnet, dass** die Reduktionsstabität der COG Keramikmasse durch eine einphasige Keramik gebildet wird, die keine Zusätze von PbO oder $Bi_2O_3$ enthält.

3. Reduktionsstabile Keramikmasse nach Anspruch 1 oder 2,
   **dadurch gekennzeichnet, daß** die COG - Keramikmasse durch geeignete Wahl der Zusammensetzungsparameter x und y einer einphasigen Keramik, z. B. x = 1 und y = 0,6 oder x = 1,5 und 0,5 < y < 1,0 bei einem Wert p = 3, 6 oder 8, auf den Temperaturkoeffizienten der Kapazität TKC < ± 30 ppm/K für COG - Kondensatoren oder

den Temperaturkoeffizienten der Resonanzfrequenz TKν0 < 10 ppm/K für Hochfrequenzanwendungen, z. B. LC - Filter, eingestellt ist.

**4.** Reduktionsstabile Keramikmasse nach einem der Ansprüche 1 bis 3, **dadurch gekennzeichnet, daß** die COG - Keramikmasse einen phasenhomogenen Aufbau aufweist, der durch Verbindung einer definierten Struktur mit entsprechender Phasenbreite einen hohen Wert für das Güte-Frequenzprodukt besitzt und für eine Anwendung im GHz - Bereich, z. B. für LC - Filtern, geeignet ist.

**5.** Reduktionsstabile Keramikmasse nach einem der Ansprüche 1 bis 4 **dadurch gekennzeichnet, daß** die Glasfritten die Zusammensetzungen
$(ZnO)_{58,5}(B_2O_3)_{31,45}(SiO_2)_{10,05}$,
$(K_2O)_{4,5}(Na_2O)_{3,5}(BaO)_{2,3}(Al_2O_3)_{2,1}(ZrO_2)_{2,9}(ZnO)_{4,4}(SiO_2)_{53,5}(B_2O_3)_{26,7}$
oder
$(Li_2O)_{7,0}(BaO)_{42,0}(B_2O_3)_{22,0}(SiO_2)_{29,0}$ aufweisen.

**6.** Verwendung einer reduktionsstabilen Keramikmasse nach einem der Ansprüche 1 bis 5 für COG - Kondensatoren oder LC - Filter.

## Claims

**1.** Reduction-resistant COG ceramic compounds with a high dielectric constant, in particular for multilayer capacitors or LC filters with Cu electrodes, based on the $BaO-Nd_2O_3-Sm_2O_3-TiO_2$ system of materials, with a composition in the phase formation range of rhombic bronzes, with additions of a glass frit from the systems

(A) $ZnO-B_2O_3-SiO_2$,

or

(B) $K_2O-Na_2O-BaO-Al_2O_3-ZrO_2-ZnO-SiO_2-B_2O_3$,

or

(C) $Li_2O-BaO-B_2O_3-SiO_2$

**characterized by** the general formula
$Ba_{6-x}(Sm_yNd_{1-y})_{8+2x/3}Ti_{18}O_{54}$ + p% by weight of glass frit, where
$1 \leq x \leq 2$, $0.5 \leq y \leq 1.0$ and $3 \leq p < 10$.

**2.** Reduction-resistant ceramic compound according to Claim 1, **characterized in that** the reduction resistance of the COG ceramic compound is formed by a single-phase ceramic which does not contain any additions of PbO or $Bi_2O_3$.

**3.** Reduction-resistant ceramic compound according to Claim 1 or 2, **characterized in that** the COG ceramic compound, by suitable selection of the composition parameters x and y of a single-phase ceramic, e.g. x = 1 and y = 0.6 or x = 1.5 and 0.5 < y < 1.0, for a value p = 3, 6 or 8, is set to a temperature coefficient of capacitance TKC < ± 30 ppm/K for COG capacitors or a temperature coefficient of resonant frequency TCν0 < 10 ppm/K for high-frequency applications, e.g. LC filters.

**4.** Reduction-resistant ceramic compound according to one of Claims 1 to 3, **characterized in that** the COG ceramic compound has a phase-homogeneous structure which, as a result of a defined microstructure being combined with a corresponding phase width, has a high value of the quality-frequency product and is suitable for an application in the GHz range, e.g. for LC filters.

**5.** Reduction-resistant ceramic compound according to one of Claims 1 to 4, **characterized in that** the glass frits

have the following compositions
$(ZnO)_{58.5}(B_2O_3)_{31.45}(SiO_2)_{10.05}$,
$(K_2O)_{4.5}(Na_2O)_{3.5}(BaO)_{2.3}(Al_2O_3)_{2.1}(ZrO_2)_{2.9}(ZnO)_{4.4}(SiO_2)_{53.5}(B_2O_3)_{26.7}$
or
$(Li_2O)_{7.0}(BaO)_{42.0}(B_2O_3)_{22.0}(SiO_2)_{29.0}$.

**6.** Use of a reduction-resistant ceramic compound according to one of Claims 1 to 5 for COG capacitors or LC filters.

## Revendications

**1.** Compositions céramiques COG stables à la réduction, ayant une grande constante diélectrique, en particulier pour des condensateurs multicouches ou des filtres LC comportant des électrodes en Cu, à base du système $BaO\text{-}Nd_2O_3\text{-}Sm_2O_3\text{-}TiO_2$, ayant une composition dans la plage de la formation des phases des bronzes orthorhombiques, additionnées d'une fritte de verre choisie parmi les systèmes:

(A) $ZnO\text{-}B_2O_3\text{-}SiO_2$,

ou

(B) $K_2O\text{-}Na_2O\text{-}BaO\text{-}Al_2O_3 - ZrO_2\text{-}ZnO\text{-}SiO_2\text{-}B_2O_3$

ou

(C) $Li_2O - BaO - B_2O - SiO_2$,

**caractérisées par** la formule générale $Ba_{6-x}(Sm_yNd_{1-y})_{8+2x/3}Ti_{18}O_{54}$ + p % en poids d'une fritte de verre, avec $1 \leq x \leq 2$, $0,5 \leq y \leq 1,0$ et $3 \leq p < 10$.

**2.** Composition céramique stable à la réduction selon la revendication 1, **caractérisée en ce que** la stabilité à la réduction de la composition céramique COG est réalisée grâce à une céramique monophasique qui ne contient pas d'additifs du type PbO ou $Bi_2O_3$.

**3.** Composition céramique stable à la réduction selon la revendication 1 ou 2, **caractérisée en ce que** la composition céramique COG est, grâce au choix approprié des paramètres de composition x et y d'une céramique monophasique, par exemple x = 1 et y = 0,6 ou x = 1,5 et 0,5 < y < 1,0 pour p = 3, 6 ou 8, ajustée aux coefficients de température de la capacité TKC < ± 30 ppm/K pour des condensateurs COG, ou aux coefficients de température de la fréquence de résonance TKν0 < 10 ppm/K pour des applications en haute fréquence, par exemple les filtres LC.

**4.** Composition céramique stable à la réduction selon l'une des revendications 1 à 3, **caractérisée en ce que** la composition céramique présente une structure à phase homogène, qui grâce à la liaison d'une structure définie ayant une largeur de phase correspondante présente une valeur élevée du produit facteur de qualité-fréquence, et convient à une application dans la plage du GHz, par exemple pour les filtres LC.

**5.** Composition céramique stable à la réduction selon l'une des revendications 1 à 4, **caractérisée en ce que** les frittes de verre ont les compositions :
$(ZnO)_{58,5}(B_2O_3)_{31,45}(SiO_2)_{10,05}$,
$(K_2O)_{4,5}(Na_2O)_{3,5}(BaO)_{2,3}(Al_2O_3)_{2,1}(ZrO)_{2,9}(ZnO)_{4,4}(SiO_2)_{53,5}(B_2O_3)_{26,7}$, ou
$(Li_2O)_{7,0}(BaO)_{42,0}(B_2O_3)_{22,0}(SiO_2)_{29,0}$

**6.** Utilisation de la composition céramique stable à la réduction selon l'une des revendications 1 à 5 pour des condensateurs COG ou des filtres LC.

FIG 1

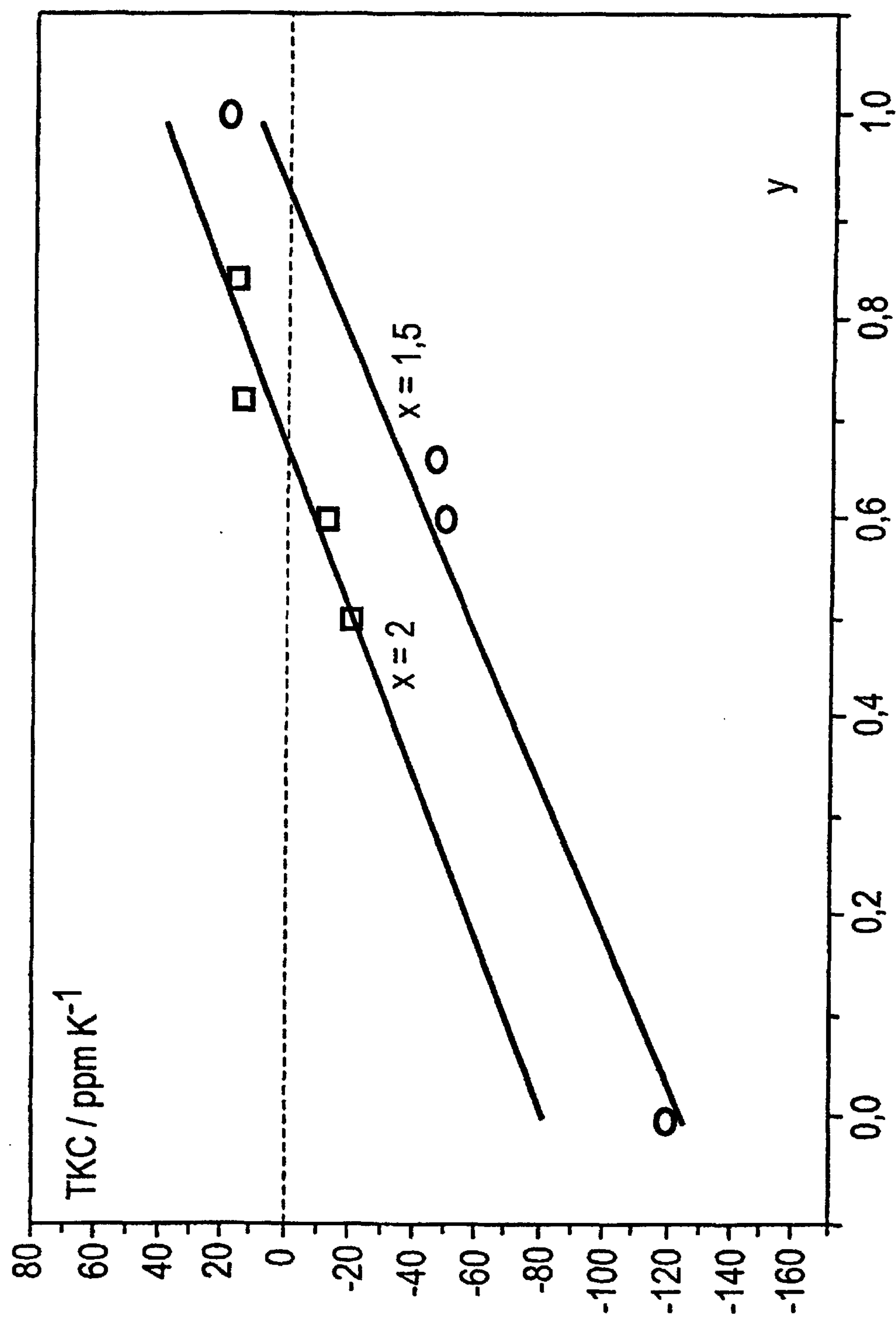
TKC / ppm K-1
x = 2
x = 1,5
y
80
60
40
20
0
-20
-40
-60
-80
-100
-120
-140
-160
0,0
0,2
0,4
0,6
0,8
1,0

FIG 2